# NOUVEAU FASCICULE DE BREVET EUROPEEN

(11) **EP 3 224 463 B2**
(45) Date de publication et mention de la décision concernant l'opposition: **22.01.2025**
(45) Mention de la délivrance du brevet: 15.04.2020
(21) Numéro de dépôt: 15808740.3
(22) Date de dépôt: 26.11.2015
(51) Int. Cl.: F02C 7/05, B64D 33/10, F02C 7/14, F01D 25/12, F02C 7/18

(54) **AGENCEMENTS À ENTRÉE D'AIR ET PIÈGE DE CORPS ÉTRANGERS DANS UN ENSEMBLE PROPULSIF D'AÉRONEF**
ANORDNUNGEN ZUM EINZIEHEN VON LUFT UND ZUM EINFANGEN VON FREMDKÖRPERN IN EINER FLUGZEUGANTRIEBSANORDNUNG
ARRANGEMENTS FOR DRAWING IN AIR AND TRAPPING FOREIGN BODIES IN AN AIRCRAFT PROPULSION ASSEMBLY

(30) Priorité: 27.11.2014 FR 1461586
(43) Date de publication de la demande: 04.10.2017
(73) Titulaire: SAFRAN AIRCRAFT ENGINES, 75015 Paris (FR)
(72) Inventeur: POUYAU, Guillaume, 77550 Moissy-cramayel (FR); COUILLEAUX, Alexandre, 77550 Moissy-cramayel (FR); SIRVIN, Nicolas, 77550 Moissy-cramayel (FR)
(74) Mandataire: Regimbeau
(86) Numéro de dépôt international: PCT/FR2015/053219
(87) Numéro de publication internationale: WO 2016/083743

(56) Documents cités:
- EP-A2- 0 924 407
- EP-A2- 2 431 590
- EP-A2- 2 724 940
- WO-A1-2014/135942
- US-A- 5 269 135

## Description

La présente invention concerne les agencements à entrée d'air et piège de corps étrangers dans un ensemble propulsif d'aéronef.

Elle trouve avantageusement, mais non limitativement, application dans le cas de turbopropulseurs d'avion.

### DOMAINE TECHNIQUE GÉNÉRAL ET ETAT DE LA TECHNIQUE

Les turbomachines ont généralement des besoins en lubrification importants. Dans le cas des turbopropulseurs d'avion notamment, les boîtes de réduction disposées entre le moteur et l'hélice du turbopropulseur représentent un poste prépondérant en consommation d'huile. Or, les frottements qui ont lieu au sein de la boîte de réduction engendrent une quantité de chaleur importante qu'il est nécessaire de dissiper.

Pour refroidir l'huile d'un circuit à proximité de la manche d'entrée d'air d'une nacelle de turbopropulseur, il a déjà été proposé par la demande EP 1.018.468 de prévoir, en aval de l'entrée d'air, un prélèvement d'air qui est envoyé sur un échangeur air-huile du type volumique tel un radiateur, afin de refroidir l'huile circulant dans celui-ci. La fente de prise d'air qui est utilisée pour envoyer le prélèvement d'air sur l'échangeur est de faible diamètre, ce qui limite les performances de refroidissement. Une telle solution de refroidissement nécessite en outre de prévoir en aval de l'échangeur une sortie régulée par laquelle de l'air-comprimé prélevé sur la turbomachine est injecté en sortie du canal de prélèvement. Cette sortie d'air-comprimé permet de maintenir le débit d'air souhaité, y compris lors des phases de ralenti du moteur.

Pour résoudre la problématique du refroidissement des circuits d'huile des turbomachines, une autre solution qui pourrait être envisagée consisterait à disposer le radiateur/échangeur de chaleur directement dans le conduit formant piège que les turbomachines de type turbopropulseur comportent classiquement au niveau de leur agencement d'entrée d'air, pour, ainsi que par exemple décrit dans la demande de brevet FR 2.614.072, piéger les corps étrangers pénétrant dans la manche d'entrée d'air.

Cependant, les corps étrangers (comme de la grêle ou des oiseaux) qui sont susceptibles de circuler dans le conduit de piège de corps étrangers pourraient causer de lourds dommages à l'échangeur de chaleur s'ils le percutaient.

Il serait alors nécessaire de disposer d'une trappe telle qu'un volet pivotant pour la protection de l'échangeur dans les phases de vol à risque et l'évacuation des corps étrangers par une sortie verticale en amont de l'échangeur de chaleur, ce qui limiterait l'écoulement d'air au niveau de l'échangeur de chaleur et ne permettrait pas un refroidissement optimal.

Cette limitation du refroidissement du fait de la trappe de protection et d'évacuation serait d'autant plus critique que les phases de vol où les risques de collision avec les corps étrangers sont les plus importants, sont des phases à basse vitesse (décollage, montée initiale, approche finale et atterrissage), où l'écoulement d'air à l'intérieur du canal servant de piège pour les corps étrangers serait le plus faible.

On connait également le document EP 2.724.940, qui décrit une solution équivalente au document FR 2.614.072, dans lequel un échangeur de chaleur volumique (qui occupe l'intégralité du volume du tronçon du canal dans lequel il est installé) est protégé contre les corps étrangers traversant le canal dans lequel ledit échangeur de chaleur est installé par un système de protection complexe situé en amont de l'échangeur de chaleur. De plus, un tel système de protection tend également à limiter l'écoulement de l'air au niveau de l'échangeur.

### PRÉSENTATION GÉNÉRALE DE L'INVENTION

Un but général de l'invention est de proposer une solution pour le refroidissement de circuits d'huile qui soit simple et permette des performances de refroidissement améliorées, sans impacter les performances de la turbomachine.

Un autre but encore de l'invention est de proposer une solution de ce type qui permette de bonnes performances de refroidissement, notamment lors des phases durant lesquelles l'avion est à une vitesse réduite.

Notamment, l'invention propose un agencement à entrée d'air et piège de corps étrangers dans une nacelle d'un ensemble propulsif d'aéronef selon la revendication 1.

De cette façon, les débits d'air importants circulant dans le canal de dérivation formant piège pour les corps étrangers sont mis à profit pour refroidir l'échangeur de chaleur, celui-ci réalisant un échange thermique surfacique. Cette disposition permet de ne pas avoir à prévoir de trappe en amont de l'échangeur pour l'évacuation des corps étrangers.

En outre, en réalisant un échange thermique surfacique, la traînée de captation est minimisée en comparaison avec un échange thermique volumique.

Selon une caractéristique particulière, la sortie d'air du canal de dérivation est disposée en confluence d'une sortie de tuyère d'échappement de l'ensemble propulsif, l'écoulement de l'air circulant dans le canal de dérivation étant accéléré par la basse pression créée par l'écoulement des gaz d'échappement en sortie de la tuyère.

Selon une caractéristique supplémentaire, le canal de dérivation étant conformé avec une déviation par rapport au conduit principal, l'échangeur de chaleur est disposé dans une zone du canal de dérivation en dehors du prolongement du conduit principal dans ledit canal de dérivation, de sorte qu'un corps étranger circulant dans le canal de dérivation ne vienne pas impacter directement l'échangeur de chaleur.

Selon une caractéristique additionnelle, l'échangeur de chaleur est un échangeur à chaleur surfacique du type à plaque à lamelles, et les lamelles de ladite plaque sont dirigées dans la direction de l'écoulement de l'air qui circule dans ledit canal de dérivation, de sorte à maximiser les échanges thermiques.

Selon une autre caractéristique, l'échangeur de chaleur utilise une paroi interne du tronçon du canal de dérivation pour réaliser l'échange de chaleur avec l'air circulant dans le canal de dérivation.

Selon une caractéristique particulière, l'échangeur de chaleur est constitué d'une canalisation à l'intérieure de laquelle l'huile circule, ladite canalisation étant enroulée le long d'une paroi externe du tronçon du canal de dérivation.

Selon une caractéristique supplémentaire, le tronçon du canal de dérivation est constitué d'un matériau métallique.

Selon une caractéristique additionnelle, ladite canalisation est en contact étroit et est fixée d'une manière rigide avec le tronçon du canal de dérivation de façon à renforcer la rigidité dudit tronçon, en particulier dans des zones dudit tronçon susceptibles d'être impactées directement par des corps étrangers circulant dans le canal de dérivation , et à augmenter les échanges thermiques.

Selon une autre caractéristique, ladite canalisation comprend un tube tronqué s'étendant selon un chemin en serpentin, ledit tube étant fixé de façon étanche au tronçon du canal de dérivation de telle sorte que la surface externe dudit tronçon forme une paroi de la canalisation.

Selon un autre aspect, l'invention porte également sur une nacelle de turbopropulseur comportant un agencement selon l'une des caractéristiques citées précédemment.

### DESCRIPTIF DES FIGURES

D'autres caractéristiques, buts et avantages de la présente invention apparaitront à la lecture de la description détaillée qui va suivre, et en regard des dessins annexés, donnés à titre d'exemples non limitatifs et sur lesquels :
- la figure 1 représente schématiquement un agencement d'entrée d'air et de canal de dérivation d'un ensemble de propulsion d'un aéronef selon un mode de réalisation possible pour l'invention ;
- la figure 2 illustre la disposition de l'échangeur surfacique par rapport à la trajectoire des corps étrangers dans le canal de dérivation ;
- la figure 3 illustre une disposition préférée de la sortie du canal de dérivation par rapport à l'écoulement de sortie de la tuyère d'échappement de l'ensemble de propulsion d'un aéronef ;
- la figure 4 illustre schématiquement un turbopropulseur comportant un agencement du type de celui illustré sur les figures 1 à 3 ;
- La figure 5 illustre une variante de réalisation de l'échangeur surfacique dans laquelle ledit échangeur de chaleur surfacique est constitué d'une canalisation enroulée autour du canal de dérivation ;
- La figure 6 représente un mode de réalisation particulier d'un échangeur surfacique en canalisation enroulée autour du canal de dérivation.

### DESCRIPTION D'UN OU PLUSIEURS MODES DE REALISATION

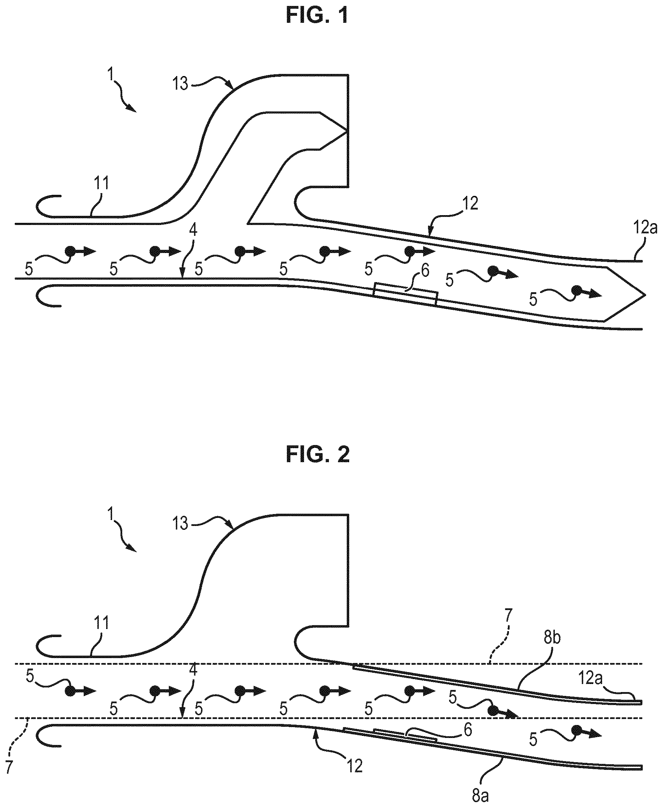

L'agencement 1 selon un premier mode de réalisation illustré sur la figure 1 comporte un conduit d'entrée d'air 11 qui se divise en deux canaux séparés, l'un (canal de dérivation 12), en partie basse, qui constitue un canal qui sert de piège pour les corps étrangers, l'autre (canal d'amenée d'air 13) qui assure l'amenée d'air jusqu'au compresseur.

Avec une telle disposition, des éventuels corps étrangers 5 qui sont charriés par un écoulement d'air 4 qui pénètre dans l'agencement d'entrée d'air de l'ensemble propulsif d'aéronef par le conduit 11, sont dirigés vers le canal de dérivation 12 formant piège et ne pénètrent pas dans le canal d'amenée d'air 13. L'ensemble propulsif d'aéronef est ainsi protégé des dégâts potentiels que peuvent créer les corps étrangers 5.

L'agencement comporte également, à l'intérieur du canal de dérivation 12, un échangeur de chaleur 6 qui est surfacique (par exemple un échangeur de type « SACOC » (Surface Air Cooler Oil Cooler, selon la terminologie anglo-saxonne)) et qui est disposé en étant affleurant le long d'une paroi interne d'un tronçon dudit canal de dérivation 12.

Cet échangeur de chaleur 6 surfacique sert à refroidir l'huile d'un circuit d'huile de lubrification, par exemple, dans le cas d'un turbomoteur, le circuit d'huile de la boîte de réduction entre le compresseur et l'hélice. Dans le mode de réalisation présenté sur la figure 1, il est par exemple constitué d'une plaque à lamelles sur la paroi interne du canal 12, dans le fond de celui-ci. Les lamelles de circulation de l'huile de ladite plaque sont alors dirigées dans la direction de l'écoulement de l'air 4 qui circule dans ledit canal de dérivation 12, de sorte à maximiser les échanges thermiques entre l'huile et l'air 4.

Cet échangeur de chaleur 6 surfacique réalise un échange thermique surfacique le long du tronçon du canal de dérivation 12. En effet, l'échange thermique à lieu au niveau de la surface du tronçon qui est couverte par l'échangeur de chaleur 6 surfacique, et non dans l'intégralité du volume dudit tronçon. En effet, les échangeurs de chaleur volumiques occupent l'intégralité du volume du tronçon du canal dans lequel ils sont situés, réalisant ainsi l'échange thermique sur l'intégralité du volume dudit tronçon, ce qui les rend sensibles aux impacts des corps étrangers 5.

Un échange thermique surfacique (et donc un échangeur de chaleur 6 surfacique) offre l'avantage de ne pas nécessiter de trappe d'évacuation en amont de l'échangeur de chaleur 6. L'échangeur de chaleur 6 peut par conséquent bénéficier de l'ensemble du débit dans le canal de dérivation 12 qui sert de piège pour les corps étrangers. Ainsi, les performances de refroidissement de l'huile de lubrification sont améliorées. De plus, le fait de ne pas utiliser de système de protection dédié à protéger l'échangeur de chaleur 6 des corps étrangers 5 permet de simplifier la structure de l'agencement 1.

En outre, étant donné que l'échangeur de chaleur 6 est choisi surfacique, et donc n'occupe pas ou qu'une très faible partie de l'espace intérieur du canal de dérivation 12, on minimise les impacts avec les corps étrangers 5, ceux-ci s'évacuant du canal de dérivation 12 par une sortie d'air 12a unique que ledit canal de dérivation 12 comporte.

Par ailleurs, afin de limiter les impacts des corps étrangers 5 sur l'échangeur de chaleur 6, on place ledit échangeur de chaleur 6 dans une zone du canal de dérivation 12 qui est peu susceptible d'être impactée d'une façon directe par les corps étrangers 5.

Notamment, le canal de dérivation 12 présente une courbure descendante par rapport à l'entrée d'air 11 et l'échangeur de chaleur 6 surfacique est situé dans le fond de cette courbure descendante, de façon à ne pas être dans le prolongement direct du conduit d'entrée d'air 11.

Sur la figure 2, les lignes 7 en traits mixtes schématisent le prolongement dudit conduit d'entrée 11 et la direction générale du flux de l'air 4 lorsqu'il entre dans le canal de dérivation 12 formant piège pour les corps étrangers. La zone 8a sous ce flux d'air est une zone protégée des impacts par les corps étrangers 5, tandis que la zone 8b entre les lignes 7 est quant à elle directement impactée par lesdits corps étrangers 5.

Avec une telle disposition où l'échangeur de chaleur 6 est placé dans la zone protégée des impacts 8a, dans la partie située à l'extérieur des lignes de prolongement 7 de l'entrée d'air 11, les corps étrangers 5 ne viennent pas impacter directement l'échangeur de chaleur 6.

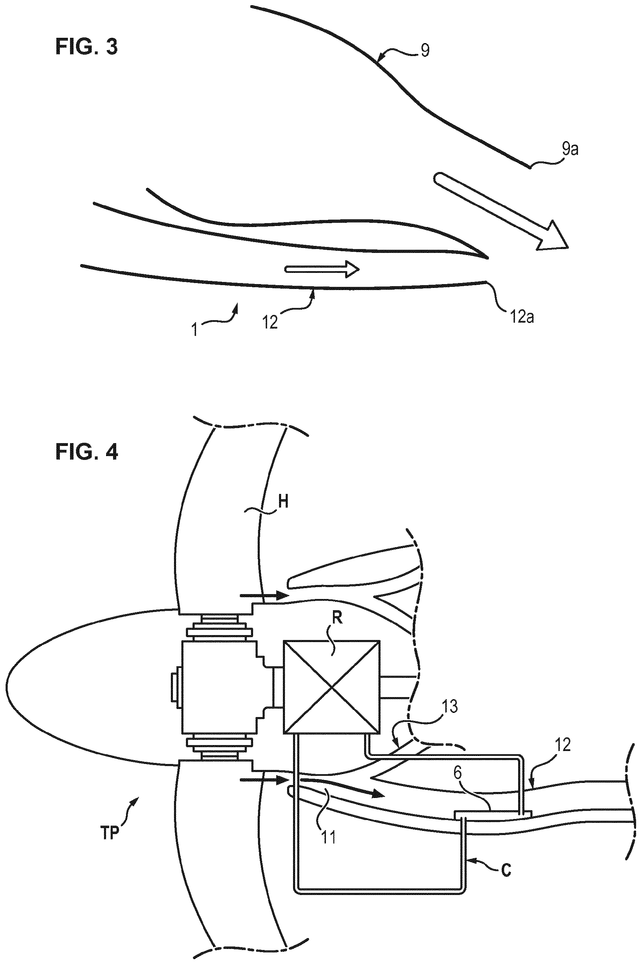

Par ailleurs, ainsi qu'illustré sur la figure 3, afin d'augmenter la vitesse de l'écoulement de refroidissement à l'intérieur du canal de dérivation 12 formant piège pour les corps étrangers 5, la sortie d'air 12a de celui-ci est prévue non pas au niveau du corps de la tuyère 9 d'échappement, mais en confluence avec la sortie 9a de la tuyère 9 de l'ensemble de propulsion.

De cette façon, l'écoulement d'air sortant de la sortie 9a de la tuyère 9 crée une dépression au niveau de la sortie d'air 12a du canal de dérivation 12 et l'écoulement de l'air 4 circulant dans le canal de dérivation 12 est accéléré par l'écoulement de sortie de la tuyère 9 grâce à un effet de type « trompe à jet ».

Ainsi, l'écoulement dans le canal 12 a en permanence une vitesse élevée, ce qui assure un refroidissement efficace de l'huile au niveau de l'échangeur de chaleur 6, y compris lors des phases durant lesquelles l'avion est à basse vitesse.

Comme on l'aura compris, et ainsi qu'illustré sur la figure 4, un agencement du type de celui qui vient d'être décrit est avantageusement utilisé dans le cadre d'un turbopropulseur. C'est ce qu'illustre la figure 4, sur laquelle on a représenté un turbopropulseur TP comportant une hélice H, ainsi qu'un réducteur R et son circuit d'huile C. Ce circuit d'huile y est refroidi par un échangeur de chaleur 6 surfacique disposé sur la paroi interne du canal de dérivation 12.

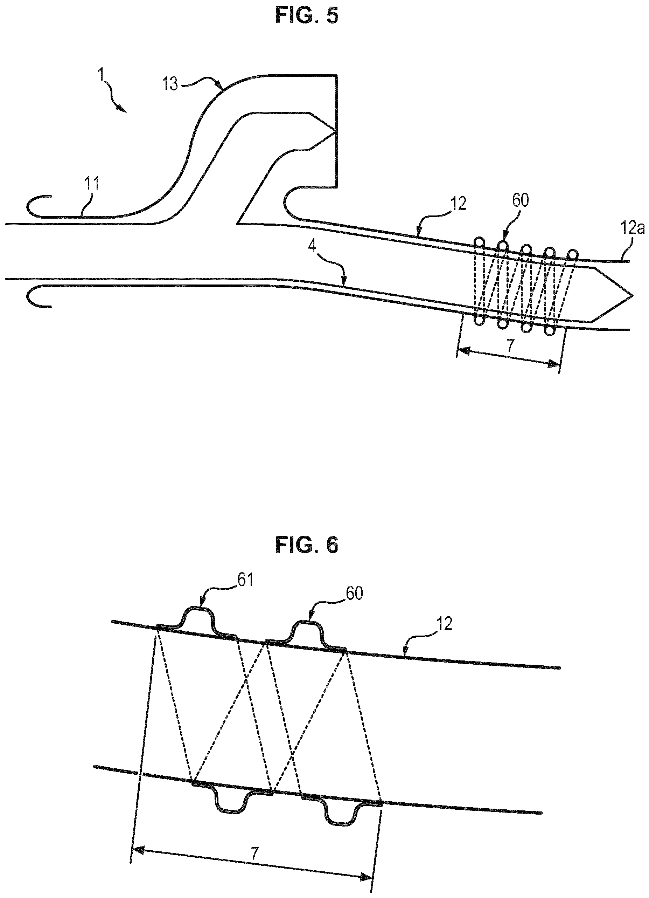

Selon une variante de réalisation, qui peut être réalisée par exemple par un agencement tel que celui illustré sur la figure 5, l'échangeur de chaleur 6 surfacique utilise une paroi interne du tronçon dudit canal de dérivation 12 pour réaliser l'échange de chaleur avec l'air 4 circulant dans le canal de dérivation 12. Plus précisément, dans cette variante, l'échange thermique entre l'air 4 et l'échangeur de chaleur 6 s'effectue au niveau de la paroi interne du tronçon sur lequel l'échangeur de chaleur est disposé.

Selon une variante de réalisation illustrée sur la figure 5, l'échangeur de chaleur 6 peut être constitué d'une canalisation 60 qui est enroulée sous la forme d'un serpentin le long d'une paroi externe d'un tronçon du canal de dérivation 12. L'huile de lubrification qui doit être refroidie circule à l'intérieur de la canalisation 60, formant ainsi une surface de refroidissement 7 qui couvre le pourtour du tronçon sur lequel la canalisation 60 est enroulée. Ainsi, l'échangeur de chaleur 6 selon une telle variante réalise un échange thermique surfacique le long du tronçon du canal de dérivation 12.

Dans la variante illustrée figure 5, l'échangeur de chaleur 6 est tel que l'échange de chaleur avec l'air 4 se fait par une paroi interne du tronçon du canal de dérivation 12.

Afin d'améliorer l'échange de chaleur entre l'huile circulant dans la canalisation 60 et l'air 4 circulant à l'intérieur du canal de dérivation 12, le tronçon du canal de dérivation 12 est constitué d'un matériau métallique.

Selon une caractéristique avantageuse, la canalisation 60 est en contact étroit et est fixée d'une manière rigide avec le tronçon du canal de dérivation 12, permettant ainsi d'une part d'augmenter les échanges de chaleur entre l'huile et l'air 4, et d'autre part de renforcer la rigidité du tronçon du canal de dérivation 12, en particulier dans les zones dudit tronçon qui sont susceptibles d'être impactées directement par les corps étrangers 5.

L'avantage d'une telle variante est que l'échangeur de chaleur 6 n'est pas disposé à l'intérieur du canal de dérivation 12, et qu'ainsi l'échangeur de chaleur 6 est beaucoup moins vulnérable aux corps étrangers 5. De plus, l'échangeur de chaleur 6 ne perturbe pas le flux de l'air 4 qui circule à l'intérieur du canal de dérivation 12.

Selon un mode de réalisation particulier de la variante d'échangeur de chaleur 6 en canalisation 60 enroulée autour du canal de dérivation 12 qui est présenté figure 6, la canalisation 60 comprend un tube tronqué 61 qui est fixé de manière étanche sur le tronçon du canal de dérivation 12 selon un chemin en serpentin, de sorte à former une cavité dans laquelle circule l'huile de lubrification à refroidir. Ainsi, l'huile de lubrification circule entre le tube tronqué 61 et le tronçon du canal de dérivation 12, et la paroi externe dudit tronçon forme une paroi de la canalisation 60.

Plus précisément, le tube tronqué 61 est une paroi en forme de chapeau dont la concavité est dirigée vers le canal de dérivation 12, de sorte à former la cavité dans laquelle circule l'huile de lubrification à refroidir.

Le tube tronqué 61 peut être fixé au canal de dérivation 12 par soudage, ou bien par rivetage et avec des joints d'étanchéité.

Il est entendu que l'invention est applicable non seulement à des turbopropulseurs mais également à d'autres types de turbomachines. En particulier, l'invention trouve un intérêt dans des turbomachines à hélices contrarotatives non carénées, appelées également « OPEN ROTOR », et plus particulièrement dans les architectures dites « puller » c'est-à-dire dans lesquelles le doublet d'hélices contrarotatives est positionné à l'avant du moteur.

## Revendications

1. Agencement à entrée d'air et piège de corps étrangers dans une nacelle d'un ensemble propulsif d'aéronef, comprenant un conduit principal (11) d'entrée d'air se séparant d'une part en un canal d'amenée d'air (13) vers un compresseur et d'autre part en un canal de dérivation (12) apte à piéger des corps étrangers (5) pénétrant dans ledit conduit principal (11), le canal de dérivation (12) étant conformé avec une déviation par rapport au conduit principal (11) et présentant une zone d'impact (8b) située dans un prolongement direct dudit conduit d'entrée (11), **caractérisé en ce qu'**il comporte un échangeur de chaleur surfacique (6) qui s'étend le long d'un tronçon du canal de dérivation (12), ledit échangeur de chaleur (6) réalisant un échange thermique surfacique le long dudit tronçon et étant accouplé à un circuit d'huile externe pour en refroidir l'huile par échange thermique avec l'air (4) circulant dans le canal de dérivation (12), ledit canal de dérivation présentant une sortie d'air (12a) servant d'évacuation pour les corps étrangers (5), l'échangeur de chaleur (6) étant disposé dans une zone (8a) du canal de dérivation (12) en dehors du prolongement du conduit principal (11) dans ledit canal de dérivation (12), de sorte qu'un corps étranger (5) circulant dans le canal de dérivation (12) ne vienne pas impacter directement l'échangeur de chaleur (6).

2. Agencement selon la revendication 1, **caractérisé en ce que** la sortie d'air (12a) du canal de dérivation (12) est disposée en confluence d'une sortie (9a) de tuyère (9) d'échappement de l'ensemble propulsif, l'écoulement de l'air (4) circulant dans le canal de dérivation (12) étant accéléré par la basse pression créée par l'écoulement des gaz d'échappement en sortie (9a) de la tuyère (9).

3. Agencement selon l'une des revendications 1 à 2, **caractérisé en ce que** l'échangeur de chaleur (6) est un échangeur surfacique du type à plaque à lamelles, et **en ce que** les lamelles de ladite plaque sont dirigées dans la direction de l'écoulement de l'air (4) qui circule dans ledit canal de dérivation (12), de sorte à maximiser les échanges thermiques.

4. Agencement selon l'une des revendications 1 à 2, **caractérisé en ce que** ledit échangeur de chaleur (6) utilise une paroi interne du tronçon dudit canal de dérivation (12) pour réaliser l'échange de chaleur avec l'air (4) circulant dans le canal de dérivation (12).

5. Agencement selon la revendication 4, **caractérisé en ce que** l'échangeur de chaleur (6) est constitué d'une canalisation (60) à l'intérieur de laquelle l'huile circule, ladite canalisation (60) étant enroulée le long d'une paroi externe du tronçon du canal de dérivation (12).

6. Agencement selon la revendication 5, **caractérisé en ce que** le tronçon du canal de dérivation (12) est constitué d'un matériau métallique.

7. Agencement selon la revendication 6, **caractérisé en ce que** ladite canalisation (60) est en contact étroit, et est fixée d'une manière rigide, avec le tronçon du canal de dérivation (12) de façon à renforcer la rigidité dudit tronçon, en particulier dans des zones dudit tronçon susceptibles d'être impactées directement par des corps étrangers (5) circulant dans le canal de dérivation (12), et à augmenter les échanges thermiques.

8. Agencement selon la revendication 7, **caractérisé en ce que** ladite canalisation (60) comprend un tube tronqué (61) s'étendant selon un chemin en serpentin le long du tronçon, ledit tube étant fixé de façon étanche audit tronçon du canal de dérivation (12) de telle sorte que la paroi externe dudit tronçon forme une paroi de la canalisation (60).

9. Nacelle de turbomachine comportant un agencement selon l'une des revendications précédentes.

## Patentansprüche

1. Anordnung zum Einziehen von Luft und zum Einfangen von Fremdkörpern in einer Gondel einer Flugzeugantriebsanordnung, umfassend eine Lufteinlass-Hauptleitung (11), die sich zum einen in einen Luftzufuhrkanal (13) in Richtung eines Kompressors und zum andern in einen Umleitungskanal (12) aufteilt, der imstande ist, Fremdkörper (5) einzufangen, die in die Hauptleitung (11) eindringen, wobei der Umleitungskanal (12) mit einer Umleitung in Bezug auf die Hauptleitung (11) ausgebildet ist, wobei der Umleitungskanal (12) eine Aufschlagzone (8b) aufweist, die sich in einer direkten Verlängerung der Einlassleitung (11) befindet, **dadurch gekennzeichnet, dass** sie einen flächigen Wärmetauscher (6) aufweist, der sich entlang eines Abschnitts des Umleitungskanals (12) erstreckt, wobei der Wärmetauscher (6) einen flächigen Wärmeaustausch entlang des Abschnitts durchführt und an einen externen Ölkreis gekoppelt ist, um dessen Öl durch Wärmeaustausch mit der Luft (4) zu kühlen, die in dem Umleitungskanal (12) zirkuliert, wobei der Umleitungskanal einen Luftauslass (12a) aufweist, der als Ableitung für die Fremdkörper (5) dient, wobei der Wärmetauscher (6) in einer Zone (8a) des Umleitungskanals (12) außerhalb der Verlängerung der Hauptleitung (11) in den Umleitungskanal (12) angeordnet ist, so dass ein Fremdkörper (5), der in dem Umleitungskanal (12) zirkuliert, nicht direkt auf den Wärmetauscher (6) aufschlägt.

2. Anordnung nach Anspruch 1, **dadurch gekennzeichnet, dass** der Luftauslass (12a) des Umleitungskanals (12) am Zusammentreffen eines Auslasses (9a) eines Abgasrohrs (9) der Antriebsanordnung angeordnet ist, wobei die Strömung der Luft (4), der im Umleitungskanal (12) zirkuliert, von dem Niederdruck beschleunigt wird, der durch die Strömung der Abgase am Auslass (9a) des Rohrs (9) erzeugt wird.

3. Anordnung nach einem der Ansprüche 1 bis 2, **dadurch gekennzeichnet, dass** der Wärmetauscher (6) ein flächiger Tauscher vom Typ Platte mit Lamellen ist, und dass die Lamellen der Platte in Strömungsrichtung der Luft (4) gerichtet sind, die im Umleitungskanal (12) zirkuliert, um den Wärmeaustausch zu maximieren.

4. Anordnung nach einem der Ansprüche 1 bis 2, **dadurch gekennzeichnet, dass** der Wärmetauscher (6) eine Innenwand des Abschnitts des Umleitungskanals (12) verwendet, um den Wärmeaustausch mit der Luft (4) durchzuführen, die im Umleitungskanal (12) zirkuliert.

5. Anordnung nach Anspruch 4, **dadurch gekennzeichnet, dass** der Wärmetauscher (6) aus einer Kanalisation (60) besteht, in deren Innerem das Öl zirkuliert, wobei die Kanalisation (60) entlang einer Außenwand des Abschnitts des Umleitungskanals (12) gewickelt ist.

6. Anordnung nach Anspruch 5, **dadurch gekennzeichnet, dass** der Abschnitt des Umleitungskanals (12) aus einem metallischen Material besteht.

7. Anordnung nach Anspruch 6, **dadurch gekennzeichnet, dass** die Kanalisation (60) in engem Kontakt ist und starr befestigt ist mit dem Abschnitt des Umleitungskanals (12), um die Steifigkeit des Abschnitts zu verstärken, insbesondere in Zonen des Abschnitts, auf die Fremdkörper (5) direkt aufschlagen könnten, die im Umleitungskanal (12) zirkulieren, und um den Wärmeaustausch zu steigern.

8. Anordnung nach Anspruch 7, **dadurch gekennzeichnet, dass** die Kanalisation (60) ein Stumpfrohr (61) umfasst, das sich entlang eines Serpentinenwegs entlang des Abschnitts erstreckt, wobei das Rohr am Abschnitt des Umleitungskanals (12) dicht befestigt ist, so dass die Außenwand des Abschnitts eine Wand der Kanalisation (60) bildet.

9. Turbotriebwerksgondel, aufweisend eine Anordnung nach einem der vorangehenden Ansprüche.

## Claims

1. An air inlet and foreign bodies trapping arrangement in a pod of an aircraft propulsion assembly, comprising a main air inlet duct (11) separating on the one hand into a channel (13) for leading air to a compressor and on the other hand into a bypass channel (12) capable of trapping foreign bodies (5) penetrating into said main duct (11), the bypass channel (12) being formed with a deflection with respect to the main duct (11) and comprising an impact zone (8b) located in the direct extension of the main air inlet duct (11), **characterized in that** it includes a heat exchanger (6) of the surface type which extends along a section of the bypass channel (12), said heat exchanger (6) accomplishing surface heat exchange along said section and being coupled to an external oil circuit to cool the oil therein by heat exchange with the air (4) circulating in the bypass channel (12), said bypass channel having an air outlet (12a) used for discharging foreign bodies (5), the heat exchanger (6) being positioned in a zone (8a) of the bypass channel (12) outside the continuation of the main duct (11) in said bypass channel (12), so that a foreign body (5) circulating in the bypass channel (12) cannot directly impact the heat exchanger (6).

2. The arrangement according to claim 1, **characterized in that** the air outlet (12a) of the bypass channel (12) is positioned in confluence with an outlet (9a) of the exhaust nozzle (9) of the propulsion assembly, the flow of air (4) circulating in the bypass channel (12) being accelerated by the low pressure created by the flow of the exhaust gases at the outlet (9a) of the nozzle (9).

3. The arrangement according to one of claims 1 through 2, **characterized in that** the heat exchanger (6) is a surface heat exchanger of the plate-and-fin type, and **in that** the fins of said plate are oriented in the direction of the flow of air (4) which circulates in said bypass channel (12), so as to maximize heat exchange.

4. The arrangement according to one of claims 1 through 2, **characterized in that** said heat exchanger (6) uses an internal wall of the section of said bypass channel (12) to accomplish the heat exchange with the air (4) circulating in the bypass channel (12).

5. The arrangement according to claim 4, **characterized in that** the heat exchanger (6) consists of a pipe (60) inside which the oil circulates, said pipe (60) being wound along an external wall of the section of the bypass channel (12).

6. The arrangement according to claim 5, **characterized in that** the section of the bypass channel (12) consists of a metallic material.

7. The arrangement according to claim 6, **characterized in that** said pipe (60) is in close contact with and rigidly attached to the section of the bypass channel (12) so as to reinforce the stiffness of said section, in particular in zones of said section likely to be impacted directly by foreign bodies (5) circulating in the bypass channel (12), and to increase heat exchange.

8. The arrangement according to claim 7, **characterized in that** said pipe (60) comprises a truncated tube (61) extending in a serpentine path along the section, said tube being attached in a fluid-tight manner to the bypass channel (12) in such a manner that the external wall of said section forms a wall of the pipe (60).

9. A turbine engine pod including an arrangement according to one of the foregoing claims.
